# EUROPEAN PATENT APPLICATION

(11) **EP 3 128 353 A1**
(43) Date of publication of application: **08.02.2017**
(21) Application number: 15180172.7
(22) Date of filing: 07.08.2015
(51) Int. Cl.: G02B 6/44, H02G 15/013

(54) **CABLE GROMMET AND FIBER OPTIC DISTRIBUTION DEVICE**

(71) Applicant: CCS Technology Inc., Wilmington, DE 19803 (US)
(72) Inventor: The designation of the inventor has not yet been filed
(74) Representative: Sturm, Christoph

(57) **Abstract**

A cable grommet (30) for fiber optic distribution device, wherein the fiber optic distribution device comprises a housing having first and second housing sections and at least one cable entry port for fiber optic cables defined by the first housing section and by a wedge-like insert inserted in the first housing section, the cable grommet (30) comprising: a cylindrically shaped basic body (34); at least one opening (35) within the basic body (34) for receiving a fiber optic cable, wherein the basic body (34) provides a sealing function against the or each fiber optic cable received by the or each opening (35) of the basic body (34), a sealing function against the first housing section of the housing of the fiber optic distribution device, and a sealing function against the respective wedge-like insert; wing-like protrusions (36) extending from the basic body (34), wherein the protrusions (36) provide an additional sealing function against the first housing section of the fiber optic distribution device, and an additional sealing function against the respective wedge-like insert inserted in the first housing section of the fiber optic distribution device. (Figure 8a)

## Description

The present patent application relates to a cable grommet for fiber optic distribution device and to a fiber optic distribution device comprising at least one cable grommet.

When designing data transmission networks comprising optical fibers, it is necessary to handle optical fibers, especially to connect optical fibers to one another. Junctions between optical fibers can be provided by patch connections and splice connections. Such junctions need to be handled both outside buildings and inside buildings within fiber optic distribution devices. Outside buildings, junctions between optical fibers are accommodated in fiber optic distribution devices which are also often called cable sleeves, closures, terminals, or street cabinets. Inside buildings, junctions between optical fiber are handled in fiber optic distribution devices which are also often called distribution cabinets or distribution frames. Fiber optic distribution devices designed as so-called wall boxes are used for the handling of junctions between optical fibers both outside buildings and inside buildings.

Fiber optic distribution devices known from the prior art comprise a housing having first and second housing sections and at least one cable entry port for a fiber optic cable defined by the first housing section and by a wedge-like insert inserted in the first housing section. At least one fiber optic cable can be inserted from an exterior into the interior space of the housing and/or passed out from the interior space of the housing to the exterior though the respective cable entry port. At least one cable entry port accommodates a cable grommet.

WO 2009/103443 A1 discloses a cable grommet having a cylindrically shaped basic body and at least one opening within the basic body for receiving a fiber optic cable. The basic body provides in a compressed state of the same a sealing function against the or each fiber optic cable received by the or each opening of the basic body, a sealing function against the first housing section, and a sealing function against the respective wedge-like insert.

The present application is based on the object to provide a novel cable grommet for a fiber optic distribution device, the cable grommet providing improved sealing properties. The present application is further based on the object to provide a fiber optic distribution device comprising at least one such novel cable grommet.

The cable grommet according to the present patent application is defined in claim 1.

The cable grommet comprises wing-like protrusions extending from the basic body, wherein the protrusions provide an additional sealing function against the first housing section of the fiber optic distribution device and an additional sealing function against the respective wedge-like insert inserted in the first housing section of the fiber optic distribution device. The wing-like protrusions improve the sealing properties of the cable grommet.

According to one embodiment, each wing-like protrusion comprises a first protrusion section extending in radial direction of the basic body and a second protrusion section being angled relative to the first protrusion section, wherein a first end of the first protrusion section is connected to the basic body, wherein a second end of the first protrusion section is connected to a first end of the second protrusion section, and wherein a second end of the second protrusion section provides a free end of the respective protrusion. Such wing-like protrusions improve the sealing properties of the cable grommet in a very effective way.

The free ends of the protrusions may comprise ribs which provide a sealing function against the second housing section of the fiber optic distribution device. The ribs further improve the sealing properties of the cable grommet.

According to some embodiments, the or each opening is closed by a membrane when no fiber optic cable is inserted into the respective opening. The or each membrane further improves the sealing properties of the cable grommet.

Embodiments of the cable grommet and fiber optic distribution device are given in the dependent claims and the description below. Exemplary embodiments will be explained in more detail with reference to the drawings, in which:
- Figure 1: shows a perspective view of a fiber optic distribution device in a closed status of the same having a housing comprising shells;
- Figure 2: shows a perspective view of a first shell of the housing together with wedge-like inserts inserted in the first shell, together with splice cassettes, together with a compression screw and together with a seal of a second shell;
- Figure 3: shows a perspective view of the second shell of the housing;
- Figure 4: shows a perspective view of the fiber optic distribution device in an opened status of the same;
- Figure 5: shows a perspective view of a wedge-like insert together with a cable grommet;
- Figure 6: shows a perspective view of the first shell of the housing with the wedge-like inserts and cable grommets being removed;
- Figure 7: shows a perspective view of the wedge-like insert of Figure 5 with the cable grommet being removed;
- Figures 8a to 8c: show different views of the cable grommet;
- Figure 9: shows an alternative cable grommet;
- Figure 10a and 10b: show different views of a compression screw.

The present patent application relates to a cable grommet for a fiber optic distribution device and to a fiber optic distribution device comprising at least one cable grommet.

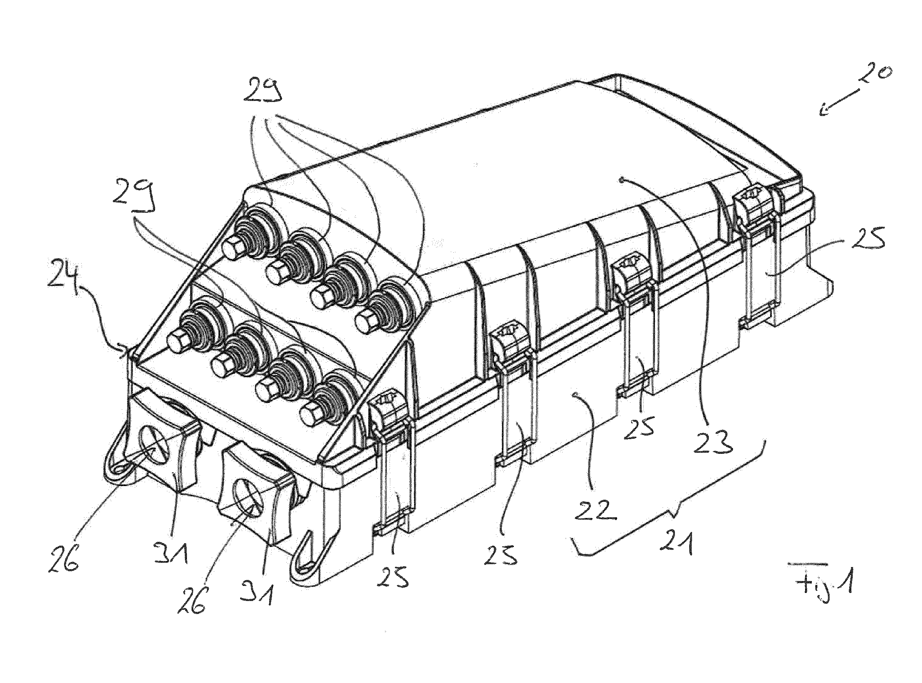

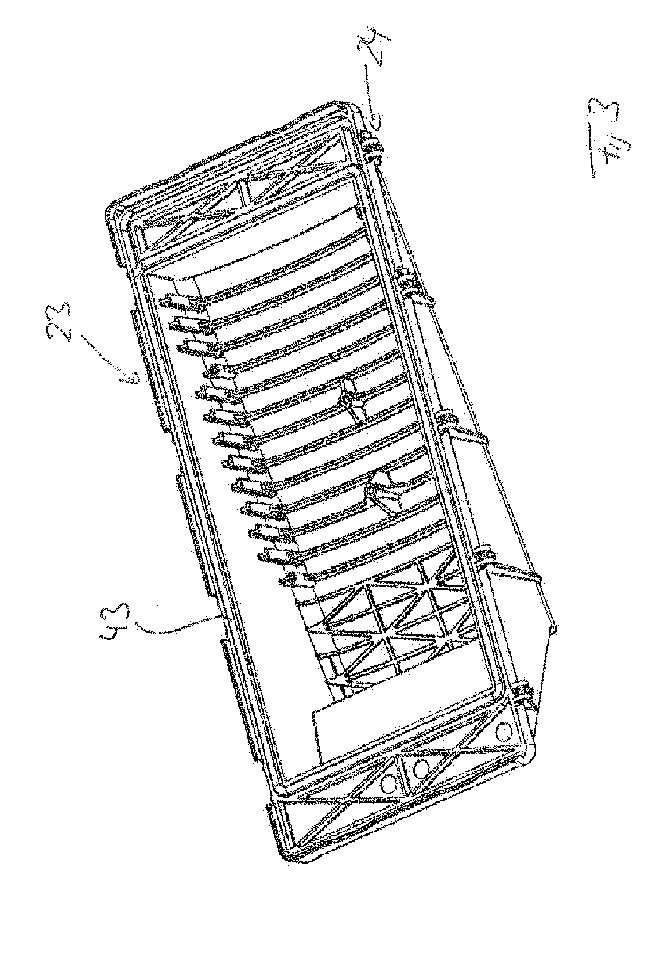

Figures 1 to 10b show different views and details of a fiber optic distribution device 20 designed as a cable closure which can be used in indoor and outdoor applications.

The fiber optic distribution device 20 comprises a housing 21 having first and second housing sections 22 and 23. The first housing section 22 is provided by a lower bottom shell and the second housing section 23 is provided by an upper cover shell. The two housing sections 22, 23 or shells are hinged together by a hinge 24 positioned at a side of the housing 21. The two housing sections 22, 23 or shells can be pivoted with respect to each other around the hinge 24. At an opposite side of the housing 21, the housing 21 comprises locking elements 25 for locking the housing 21 in a closed status of the same.

The housing 21 defines an interior space of the fiber optic distribution device 20. Splice cassettes 28 are positioned in the interior space of the fiber optic distribution device 20. The housing 21, namely in the shown embodiment the first housing section 22, comprises cable entry ports 26 for fiber optic cables. Each cable entry port 26 is defined by the first housing section 22 and by a wedge-like insert 27 inserted in the first housing section 22. Each cable entry port 26 can be used to insert at least one fiber optic cable from an exterior of the housing 21 into the interior space of the housing 21, and/or to pass out at least one fiber optic cable from the interior space of the housing 21 to the exterior.

The housing 21, namely in the shown embodiment the second housing section 23, further comprises in the shown embodiment fiber optic adapters / receptacles 29. From the exterior of the housing 21, fiber optic connectors (not shown) can be connected to the fiber optic adapters 29. From the interior space of the housing 21, the fiber optic adapters 29 can receive connectors of so-called pigtails (not shown) which are also connected to a splitter (not shown) mounted on one of the slice cassettes 28.

The cable entry ports 26 which are defined by the first housing section 22 and by the respective wedge-like insert 27 each accommodate a cable grommet 30 and a compression screw 31 for transferring the respective cable grommet 30 between an compressed and uncompressed status.

Each cable entry port 26 has a first, threaded cable entry port section 26a receiving a threaded section of the respective compression screw 31 and a second, unthreaded cable entry port section 26b receiving the respective cable grommet 30. The first housing section 22 and the respective wedge-like insert 27 provide together these two cable entry port sections 26a, 26b of the respective cable entry port 26.

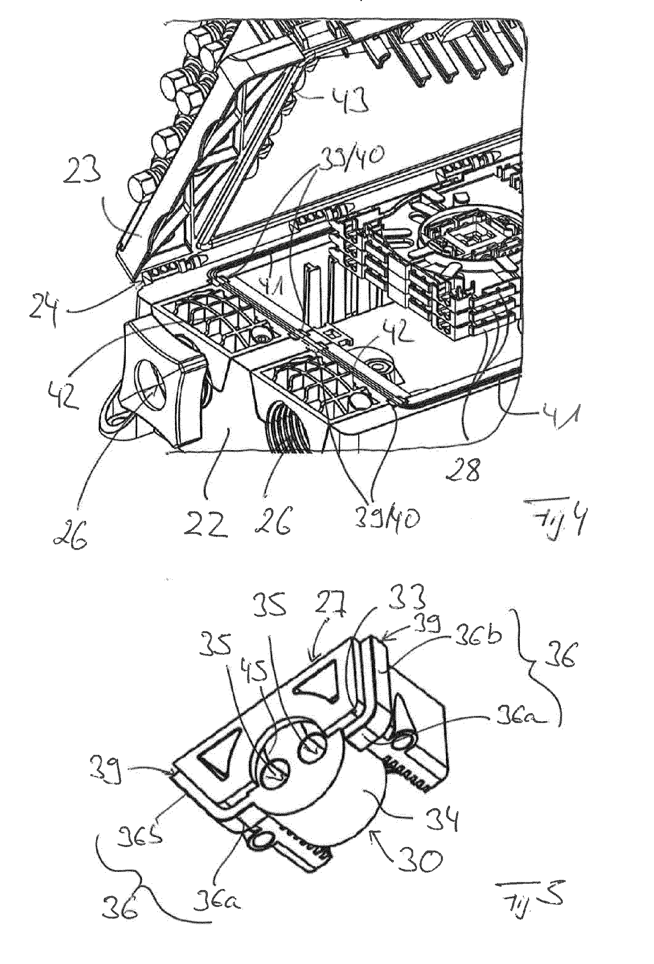

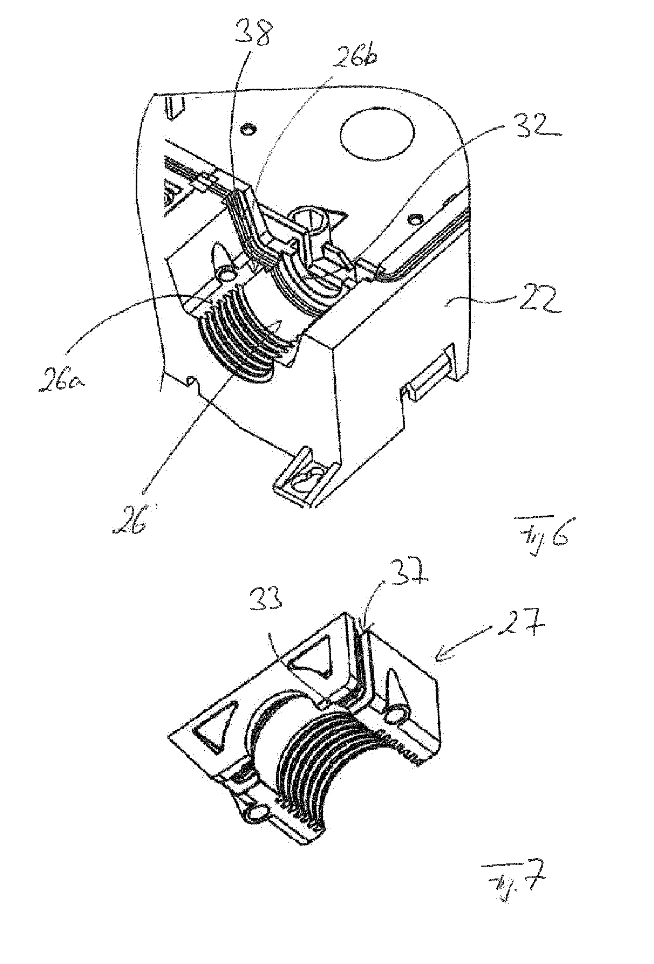

Wall sections 32, 33 (see Figures 5 and 6) of the first housing section 22 and of the respective wedge-like insert 27 facing the interior of the fiber optic distribution device 20 provide a positioning element for the respective cable grommet 30 within the respective cable entry port 26 and keep the respective cable grommet 30 in place when the same is compressed by the respective compression screw 31.

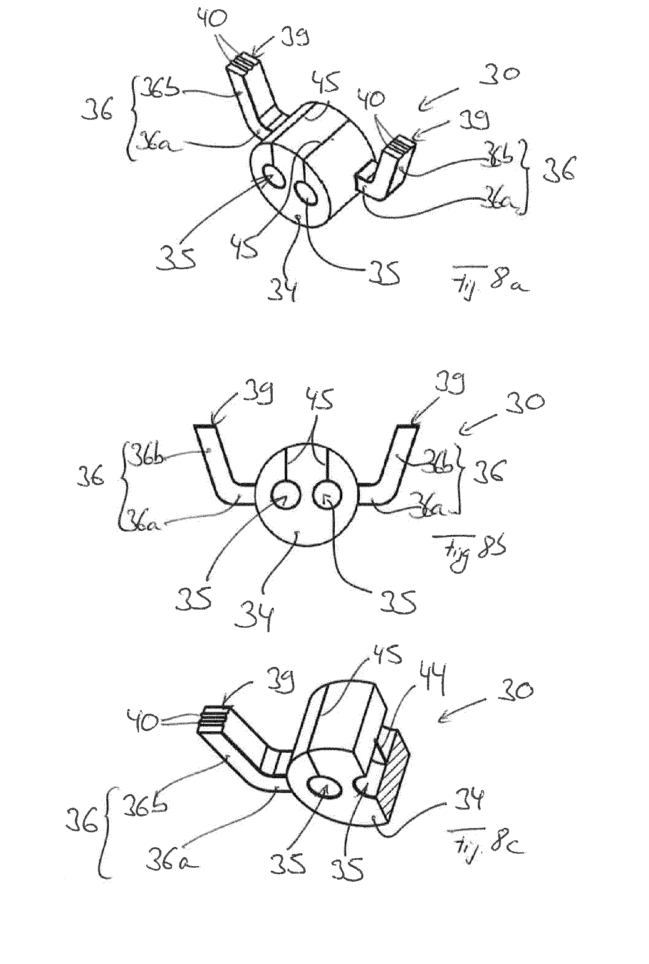

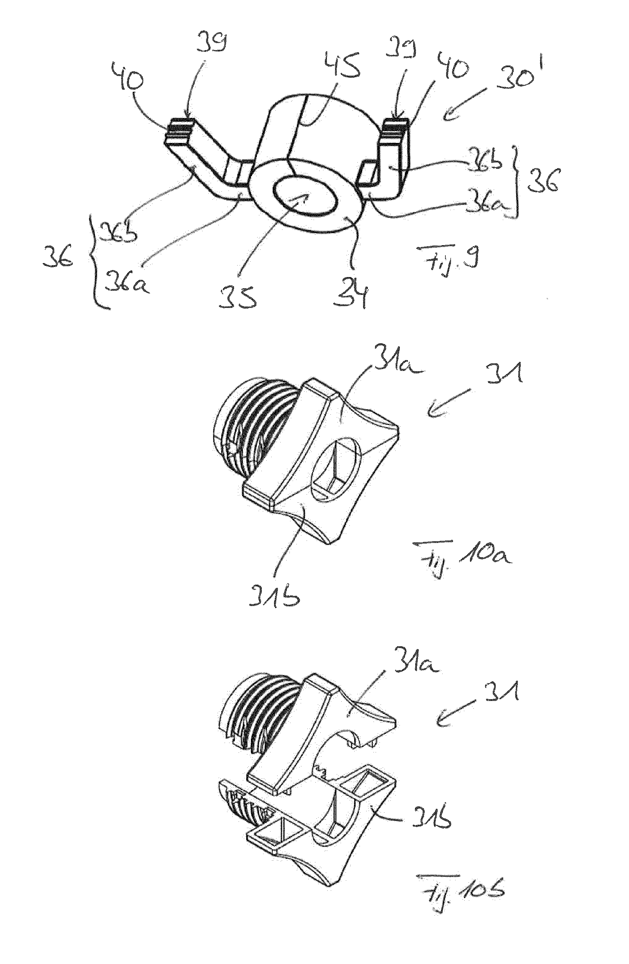

Each cable grommet 30 comprises a cylindrically shaped basic body 34. The basic body comprises at one opening 35 for receiving a fiber optic cable. The cable grommet 30 of Figures 8a, 8b and 8c comprises two openings 35. The cable grommet 30' of Figure 9 comprises one opening 35.

The basic body 34 provides in a compressed status of the same a sealing function against the or each fiber optic cable received by the or each opening 35 of the basic body 24, a sealing function against the first housing section 22 of the housing 21 of the fiber optic distribution device 20, and a sealing function against the respective wedge-like insert 27.

Each cable grommet 30 further comprises wing-like protrusions 36 extending from the basic body 34, wherein the protrusions 36 provide an additional sealing function against the first housing section 22 of the fiber optic distribution device 20 and an additional sealing function against the respective wedge-like insert 27 inserted in the first housing section 22 of the fiber optic distribution device 20.

The first housing section 22 and the respective wedge-like insert 27 each provide recesses 37, 38 (see Figures 5 and 6) accommodating the wing-like protrusions 36 of the respective cable grommet 30.

Each wing-like protrusion 36 of the cable grommet 30 comprises a first protrusion section 36a extending in radial direction of basic body 34 of the cable grommet 30 and a second protrusion section 36b being angled relative to the first protrusion section 36a. A first end of the first protrusion section 36a is connected to the basic body 34. A second end of the first protrusion section 36a is connected to a first end of the second protrusion section 36b. A second end of the second protrusion section 36b provides a free end 39 of the respective protrusion 36.

The free ends 39 of the protrusions 36 each comprise ribs 40 which provide a sealing function against the second housing section 23 of the fiber optic distribution device 20. These ribs 40 are, when the respective cable grommet 30 is accommodated within the respective cable entry portion 36, aligned with ribs 41 provided on the first section 22 of the housing 21 of the fiber optic distribution device 20 and with ribs 42 provided on the respective wedge-like insert 27. The ribs 40, 41, 42 are made from a rigid material and act together with an elastic sealing element 43 of the second housing section 23 when the housing 21 is closed.

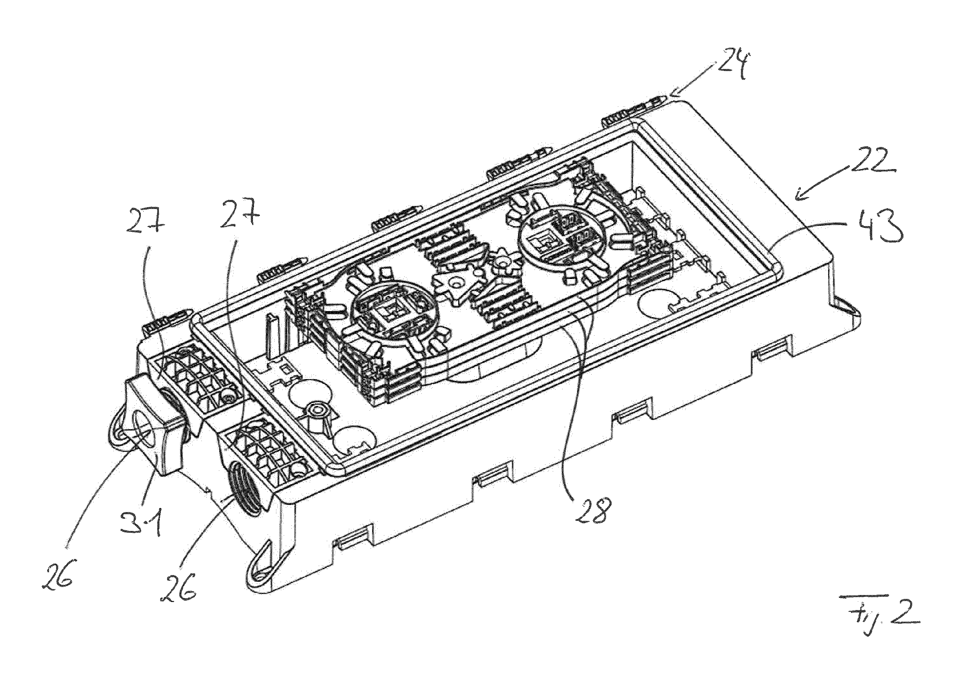

In Figure 2 the elastic sealing element 43 covers the ribs 40, 41, 42.

The basic body 34 and the wing-like protrusions 36 of the cable grommet 30 are made from an elastically deformable material. Preferably, the basic body 34 and the wing-like protrusions 36 are formed as a single monolithic cable grommet 30. When the compression screw 31 becomes fasted, the same compresses in the first instance the basic body 34 of cable grommet 30. The wing-like protrusions 36 of cable grommet 30 become in the first instance compressed when the respective wedge-like insert 27 becomes inserted into the first housing section 22 and when the housing 21 becomes closed and locked by the locking elements 25.

The or each opening 35 within the basic body 34 is closed by a respective membrane 44 (see Figure 8c) when no fiber optic cable is inserted into the respective opening 35. When inserting a cable into the respective cable opening 35, the membrane 44 has to be removed (e.g., by cutting the same from the basic body 34). The membrane 44 is preferably positioned in the middle of the respective opening 35.

A cut fiber optic cable can be inserted into an opening 35 of the cable grommet 30 in the closed status of the fiber optic distribution device when the respective compression screw 31 is released. For inserting an uncut fiber optic cable into an opening 35 of the cable grommet 30 the housing 21 needs to be opened, the compression screw 31 and the respective wedge-like insert 27 need to be removed and the uncut fiber optic cable can then be inserted through a slot 45 in the basic body 34 of the cable grommet 30 into the respective opening 35. For the handling of such uncut fiber optic cables the compression screw 31 comprises halves 31 a, 31 b which can be assembled and disassembled.

The cable grommet 30 provides several advantages. The cable grommet 30 provides improves sealing properties. The cable grommet 30 can be used for cut and uncut fiber optic cables. The cable grommet 30 seals against the respective the fiber optic cable, the first housing section 22, and the respective wedge-like insert 27 inserted into the first housing section 22. The same seals also against the second housing section 23, namely the ribs 40 at the free ends 39 of the wing-like protrusions 36 of the cable grommet 30. There is no dummy plug needed when an opening 35 is not in use due to the membrane 44 closing the respective opening 35.

### List of reference numerals

- 20: fiber optic distribution device
- 21: housing
- 22: first housing section
- 23: second housing section
- 24: hinge
- 25: locking element
- 26: cable entry port
- 26a: first cable entry port
- 26b: second cable entry port
- 27: wedge-like insert
- 28: slice cassette
- 29: fiber optic adapter
- 30: cable grommet
- 30': cable grommet
- 31: compression screw
- 31 a: halve
- 31 b: halve
- 32: wall section
- 33: wall section
- 34: basic body
- 35: opening
- 36: wing-like protrusion
- 36a: first protrusion section
- 36b: second protrusion section
- 37: recess
- 38: recess
- 39: free end
- 40: rib
- 41: rib
- 42: rib
- 43: sealing element
- 44: membrane
- 45: slot

## Claims

1. A cable grommet (30) for fiber optic distribution device (20), wherein the fiber optic distribution device (20) comprises a housing (21) having first and second housing sections (22, 23) and at least one cable entry port (26) for fiber optic cables defined by the first housing section (22) and by a wedge-like insert (27) inserted in the first housing section (22), the cable grommet (30) comprising:
a cylindrically shaped basic body (34);
at least one opening (35) within the basic body (34) for receiving a fiber optic cable;
wherein the basic body (34) provides a sealing function against the or each fiber optic cable received by the or each opening (35) of the basic body (34), a sealing function against the first housing section (22) of the housing (21) of the fiber optic distribution device (20), and a sealing function against the respective wedge-like insert (27);
**characterized by**
wing-like protrusions (36) extending from the basic body (34), wherein the protrusions (36) provide an additional sealing function against the first housing section (22) of the fiber optic distribution device (20) and an additional sealing function against the respective wedge-like insert (27) inserted in the first housing section (22) of the fiber optic distribution device (20).

2. The cable grommet of claim 1, **characterized in that** each wing-like protrusion (36) comprises
a first protrusion section (36a) extending in radial direction of the basic body (34);
a second protrusion section (36b) being angled relative to the first protrusion section (36a);
wherein a first end of the first protrusion section (36a) is connected to the basic body (34):
wherein a second end of the first protrusion section (36s) is connected to a first end of the second protrusion section (36b);
wherein a second end of the second protrusion section (36b) provides a free end (37) of the respective wing-like protrusion (36).

3. The cable grommet of claim 2, **characterized in that** the free ends (37) of the protrusions (36) each comprise ribs (40) which provide a sealing function against the second housing section (23) of the fiber optic distribution device (20).

4. The cable grommet of one of claims 1 to 3, **characterized in that** the basic body (34) and the wing-like protrusions (36) are made from an elastically deformable material.

5. The cable grommet of one of claims 1 to 4, **characterized in that** the basic body (34) and the wing-like protrusions (36) are formed as a single monolithic element.

6. The cable grommet of one of claims 1 to 5, **characterized in that** the or each opening (35) within the basic body (34) is closed by a membrane (44) when no fiber optic cable is inserted into the respective opening (35).

7. A fiber optic distribution device (20) comprising:
a housing (21) having first and second housing sections (22, 23) defining an interior space of the fiber optic distribution device (20), wherein at least one fiber optic cable can be inserted from an exterior into the interior space of the housing (21) and/or passed out from the interior space of the housing (21) to the exterior;
wherein at least one cable entry port (26) for fiber optic cables is defined by the first housing section (22) and by a wedge-like insert (27) inserted in the first housing section (22), the or each cable entry port (26) accommodating a cable grommet (30),
**characterized in that**
the or each cable grommet (30) is provided by a cable grommet (30) of one of claims 1 to 6.
